# EUROPÄISCHE PATENTANMELDUNG

(11) **EP 0 713 030 A1**
(43) Veröffentlichungstag der Anmeldung: **22.05.1996**
(21) Anmeldenummer: 95117828.4
(22) Anmeldetag: 10.11.1995
(51) Int. Cl.: F16F 13/10, F16F 3/10

(54) **Lager zur dämpfenden Anordnung schwingender Massen**

(30) Priorität: 11.11.1994 DE 4440392
(71) Anmelder: WOCO Franz-Josef Wolf & Co., D-63628 Bad Soden-Salmünster (DE)
(72) Erfinder: Wolf, Franz Josef, D-63629 Bad Soden-Salmünster (DE); Nix, Stefan, D-63607 Wächtersbach (DE)
(74) Vertreter: Jaeger, Klaus, Dr.

(57) **Zusammenfassung**

Es ist ein Lager zur dämpfenden Anordnung schwingender Massen mit einem gummielastischen Tragkörper (2), einer an und/oder in dem Tragkörper angeordneten Aufnahmevorrichtung (3) zur Verbindung des Lagers mit der schwingenden Masse und ein Gehäuse (4) vorgesehen, welches das Lager kraftschlüssig an einer Anordnungsvorrichtung abstützt, wobei das Lager mit einer Federeinrichtung (6) zur Aufnahme weitgehend vertikal wirkender Lasten versehen ist.

## Beschreibung

Die vorliegende Erfindung betrifft ein Lager zur dämpfenden Anordnung schwingender Massen mit einem gummielastischen Tragkörper gemäß dem Oberbegriff des Anspruchs 1.

Derartige Lager werden überall dort eingesetzt, wo es erforderlich ist, die Schwingungen schwingender Massen klein zu halten, d.h. also deren Schwingungsamplituden zu dämpfen. Gleichzeitig sollen solche Lager den durch die schwingenden Massen erzeugten Körperschall, seine Fortleitung und seine Abstrahlung in die Umgebung dämmen und dämpfen.

Ein typischer Anwendungsfall für solche dämpfenden Lager ist der Bereich des Kraftfahrzeugbaus, bei dem die Merkmale des Benutzungskomforts eine zunehmend bedeutsamere Rolle spielen.

So werden derartige Lager häufig als Motorlager eingesetzt, wobei sie sowohl statische als auch dynamische Lasten aufnehmen und in die Karosserie des Kraftfahrzeugs einleiten.

Hierbei rührt die statische Belastung von der Eigenmasse des Motors her, während die dynamische Belastung durch Motorschwingungen in vielfacher Hinsicht induziert wird. So führt beispielsweise das Starten des Motors oder aber die Fahrt des Fahrzeugs über große Bodenunebenheiten zu niederfrequenten Schwingungen mit großen Störamplituden, während der Lauf des Motors bei hohen Drehzahlen zu höherfrequenten Schwingungen mit kleinen Störamplituden führt.

Aufgrund der bereits angeführten hohen Anforderungen an den Benutzungskomfort ist es erforderlich, daß derartige Lager Schwingungsamplituden in allen drei Raumrichtungen bedämpfen.

Das Reaktionsverhalten solcher Motorlager sollte daher möglichst in allen drei Raumrichtungen unabhängig voneinander einstellbar sein. Aus diesem Anforderungsprofil ergeben sich Zielkonflikte. Da der bei diesen Lagern regelmäßig vorhandene gummielastische Tragkörper durch die Masse des zu lagernden Motors statisch vorgespannt ist, versteift sich sein Federverhalten mit der Folge deutlicher Einbußen bezüglich des akustischen Komforts, also einer Verminderung der akustischen Dämpfung und Entkopplung.

Daneben muß der Tragkörper den Motor in der Karosserie des Kraftfahrzeugs horizontal führen und die möglichen Motorbewegungen in allen drei Raumrichtungen durch Anschläge begrenzen. Es macht dies deutlich, daß der Tragkörper eine Vielzahl von Funktionen erfüllen muß, wozu er einerseits weich ausgelegt sein sollte, andererseits aber eine zu weiche Auslegung schon unter statischer Vorlast zu einer Verhärtung und damit einem akustisch negativen Verhalten und unter insbesondere dynamischer Belastung zu einer deutlichen Verminderung der mechanischen Haltbarkeit führt.

Alle derzeit bekannten gattungsgemäßen Lager zur Anordnung schwingender Massen mit einem gummielastischen Tragkörper unterliegen diesem Zielkonflikt, so daß bei der Auslegung des Tragkörpers derartiger Lager in konstruktiver Hinsicht Kompromisse eingegangen werden müssen.

Ausgehend hiervon liegt der vorliegenden Erfindung zur Beseitigung der geschilderten technischen Probleme die Aufgabe zugrunde, ein Lager zur dämpfenden Anordnung schwingender Massen zu schaffen, mit dem es möglich ist, das Reaktionsverhalten und das akustische Verhalten des Lagers auf Belastungen in allen drei Raumrichtungen unabhängig voneinander abzustimmen.

Die Erfindung weist zur Lösung dieser Aufgabe die im Anspruch 1 angegebenen Merkmale auf.

Vorteilhafte Ausgestaltungen hiervon sind Gegenstand der weiteren Ansprüche.

Der Erfindung liegt der Gedanke zugrunde, das Lager mit einem Tragkörper auszustatten, der nicht mehr den unerwünschten Auswirkungen einer verhärtenden statischen Vorspannung unterliegt, so daß er an alle erdenklichen Belastungsfälle angepaßt werden kann, Schwingungen in allen drei Raumrichtungen dämpfen kann und ein verbessertes akustisches Verhalten zeigt.

Erfindungsgemäß ist hierzu ein Lager zur dämpfenden Anordnung schwingender Massen mit einem gummielastischen Tragkörper vorgesehen, einem an und/oder in dem Tragkörper angeordneten Anschlussstück zum Verbinden des Lagers mit der schwingenden Masse und einem Gehäuse, das das Lager ortsfest abstützt, wobei das Lager mit einer zusätzlichen Federeinrichtung zur Aufnahme weitgehend vertikal wirkender Lasten versehen ist.

Es bedeutet dies mit anderen Worten, daß das Lager einen gummielastischen Tragkörper aufweist, der nicht mehr die Aufgabe hat, aufgrund der Eigenmasse der schwingenden Masse hervorgerufene statische Lasten aufzunehmen, da diese weitgehend vertikal wirkenden Lasten von der zusätzlichen Federeinrichtung im Lager aufgenommen werden. Unter der weitgehend vertikal wirkenden Last ist dabei jede denkbare Belastung zu verstehen, die aufgrund und in Richtung der Erdbeschleunigung wirkt. Hierdurch ist in vorteilhafter Weise ein Lager geschaffen, dessen gummielastischer Tragkörper nicht mehr an die Aufnahme dieser weitgehend vertikal wirkenden Lasten angepaßt werden muß, so daß er zur Aufnahme der weitaus geringeren dynamischen Lastkomponenten und der in Lagerradialrichtung verlaufenden Lasten unter Erreichung eines sehr guten akustischen Verhaltens weich ausgebildet werden kann.

Die erfindungsgemäß vorgesehene Federeinrichtung ist körperlich vom gummielastischen Tragkörper getrennt ausgebildet, wirkt aber mit dem Tragkörper parallel zur Aufnahme von Lasten in allen drei Raumrichtungen zusammen. Die Federeinrichtung nimmt dabei sowohl und primär die weitgehend vertikal wirkenden Lasten auf, im wesentlichen also die statischen Anteile, als aber auch dynamische Lastanteile, während weitgehend orthogonal zur vertikal wirkenden Lastrichtung verlaufende Belastungen vom gummielastischen Tragkörper aufgenommen werden, der hierzu, erforderlichenfalls auch nur sektorweise, dem dynamischen Anforderungsprofil entsprechend weich ausgebildet sein kann.

Die Federeinrichtung und der Tragkörper können hierbei unabhängig voneinander zur Aufnahme von Belastungen in allen drei Raumrichtungen hinsichtlich ihres Reaktionsverhaltens eingestellt bzw. ausgebildet sein.

Das Lager weist ein Widerlagerstück auf, gegen das die Federeinrichtung abgestützt ist, und das die von der Federeinrichtung aufgenommene Last in das Gehäuse einleitet. Das Widerlagerstück ist seinerseits an einer Anordnungsvorrichtung abgestützt.

In vorteilhafter Weise ist hierzu die Federeinrichtung zwischen dem an und/oder in dem Tragkörper angeordneten Auflastanschlussstück und dem Widerlagerstück angeordnet, wobei das Anschlussstück und das Widerlagerstück vorzugsweise aus Metall bestehen.

Hierbei ist es möglich, den gummielastischen Tragkörper im Bereich zwischen dem Anschlussstück und dem Gehäuse so anzuordnen und die zusätzliche Federeinrichtung so einzustellen, daß der Tragkörper unter statischer Belastung des Lagers unverspannt ist. Der gummielastische Tragkörper ist an dem metallisch ausgebildeten Anschlussstück und dem vorzugsweise ebenfalls metallisch ausgebildeten Gehäuse zweckmässigerweise durch eine direkte Gummi-Metall-Verbindung angeschlossen. Der so unverspannt gehaltene Tragkörper unterliegt keiner Versteifung seiner Federkenndaten, kann weich ausgelegt sein und so eine niedrige dynamische Federrate und ein daraus resultierendes hohes akustisches Isolationsverhalten aufbringen.

Gemäß der Erfindung ist es aber auch möglich, daß der gummielastische Tragkörper im Bereich zwischen dem Anschlussstück und dem Gehäuse, wo erforderlich, derart angeordnet ist, daß er unter statischer Belastung des Lagers vorgespannt ist. Dies ist dann von Vorteil, wenn durch die zu erwartenden dynamischen Belastungen eine Kompensation der Vorspannung des Tragkörpers zu erwarten ist. Dies kann beispielsweise dann von Vorteil sein, wenn grössere dynamische Belastungen in einer bestimmten Raumrichtungen zu erwarten sind, zu deren Aufnahme oder unterstützender Aufnahme auch der gummielastische Tragkörper zweckmässigerweise vorgespannt sein kann.

In Weiterführung der Erfindung kann der gummielastische Tragkörper im Bereich seiner Anbindung am Gehäuse zumindest teilweise dünnwandig ausgebildet sein, so daß er in diesem Bereich eine ausgesprochen weiche Ausbildung besitzt. Diese Ausbildung ist insbesondere dann von Vorteil, wenn die Federeinrichtung nach einer Ausgestaltung der Erfindung in einer mit einem hydraulischen Dämpfungsfluid gefüllten Arbeitskammer angeordnet ist, so daß sich diese dünnwandigen Bereiche des gummielastischen Tragkörpers auch bei nur geringen dynamischen Belastungen ausgleichend verformen können. Ein so ausgebildetes Lager zeigt eine insgesamt weiche Kennlinie auch im Bereich nur kleiner dynamischer Lasten mit einem sich daraus ergebenden hohen akustischen Komfort.

In Fortführung der Erfindung ist es dabei auch möglich, den gummielastischen Tragkörper im Bereich seiner Anordnung zwischen dem Anschlussstück und dem Gehäuse an Teilabschnitten seines Außenumfangs beabstandet zum Gehäuse anzuordnen. Es heißt dies mit anderen Worten, daß in diesem Fall der gummielastische Tragkörper eine sternähnliche oder keilnabenförmig ausgebildete Struktur aufweist, so daß er sich an Teilabschnitten seines Außenumfangs von der Anordnungsvorrichtung bis zum umgebenden Gehäuse erstreckt, während er in einem daran anschließenden Teilabschnitt seines Außenumfangs zwar an dem Anschlussstück, beispielsweise über eine Gummi-Metall-Verbindung, festgelegt ist, zum Gehäuse jedoch beabstandet ausgebildet und nur über den bereits angesprochenen dünnwandigen Bereich mit dem Gehäuse verbunden ist. Im Bereich dieser dünnwandigen Anbindung des gummielastischen Tragkörpers am Gehäuse kann dann die bereits angesprochene hydraulische Entkopplung derart stattfinden , daß dieser dünnwandige Bereich des gummielastischen Tragkörpers auf geringe dynamische Belastungen mit einer Verformungsbewegung reagiert.

In Fortführung der Erfindung ist es dabei von Vorteil, wenn die Federeinrichtung innerhalb der Arbeitskammer eines hydraulisch dämpfenden Lagers angeordnet ist, wobei die Arbeitskammer über eine Durchflußeinrichtung mit einer Ausgleichskammer des Lagers zum Fluidaustausch in Verbindung steht. Hierdurch ist eine Anordnung ähnlich einem Hydrolager geschaffen, so daß das Lager mit dem Fluidaustausch zwischen der Arbeitskammer und der Ausgleichskammer hydraulische Dämpfungsarbeit leistet.

Hierzu kann in vorteilhafter Weise die Durchflußeinrichtung ein mit Durchströmungssteuerungseinrichtungen in Form von beispielsweise Ventilen versehener Ringkanal sein, der in dem Widerlagerstück ausgebildet ist, an dem sich die Federeinrichtung abstützt. Das so geschaffene Lager kann vorteilhaft zur schwingungsdämpfenden Lagerung einer Verbrennungskraftmaschine in einem Kraftfahrzeug eingesetzt werden.

Das Lager gemäß der Erfindung zeichnet sich also wesentlich dadurch aus, daß die Tragfunktion des Tragkörpers durch die erfindungsgemäß vorgesehene Federeinrichtung ersetzt oder zumindest teilweise ersetzt wird, wodurch es möglich ist, den Tragkörper gezielt auf anwendungsfallspezifische radiale Dämpfungs-, Führungs- und Anschlagsfunktionen auszulegen. Hierdurch ist erreicht, daß das Lager gemäß der Erfindung im Vergleich mit bekannten Lagern deutlich mehr hydraulische Dämpfungsarbeit leisten kann mit deutlich erhöhtem Pumpvolumen. Im Gegensatz zu bekannten Lagern ist es nicht mehr erforderlich, die Tragfeder im Hinblick auf vertikal wirkende Lasten, z.B. statische Motorlasten, auszulegen, wodurch eine große konstruktive Gestaltungsfreiheit hinsichtlich der Auslegung und Abstimmung des Tragkörpers erreicht wird. Das so geschaffene Lager kann in seiner statischen und dynamischen Steifigkeit auf die unterschiedlichsten Anwendungsanforderungen abgestimmt werden, und zwar in den meisten Fällen ohne akustische Kompromisse eingehen zu müssen.

Im Vergleich zu den bei bekannten Hydrolagern die hydraulische Entkopplung übernehmenden und notwendigen zusätzlichen Bauteilen kann der Tragkörper partiell so dünn ausgebildet werden, daß er die Funktion der hydraulischen Entkopplung mitübernimmt. Dadurch wird zusätzlich auch eine kostengünstigere Montage erreicht.

Als Federeinrichtung können im Rahmen der vorliegenden Erfindung prinzipiell alle Arten von Federn eingesetzt werden, die für den Maschinen- und Fahrzeugbau geeignet sind. Das sind namentlich die Standardfedern, Elastomerfedern und Balgfedern. Als Standardfedern seien die folgenden genannt: Federn mit runden, eckigen oder flachen Querschnitten; Federn aus Stahl oder Kunststoff; Schrauben-, Spiral-, Schenkel-, Stab-, Blatt-, Bügel-, Seil-, Teller- oder Membranfedern; sowie Federn mit zylindrischem, flachem, bombiertem, tailliertem oder konischem Aufbau. Die Federn können radial geführt bzw. gleitend aufgestellt werden.

Gegenüber den Standardfedern können die Elastomerfedern bei Druckbelastung höher belastet und dadurch mit kleineren Abmessungen eingesetzt werden. Durch Verstärkung solcher Druckfederkörper aus Elastomeren mit haftvermittelten nichtelastischen Zwischenlagen, sogenannten "Formblechen", kann die Druckbelastbartkeit solcher Elastomerdruckfederkörper in an sich bekannter Weise noch einmal deutlich erhöht werden.

Insbesondere bietet ein solcher Elastomer-Druckfederkörper Vorteile bei starker radialer Verformung.

Die Erfindung ist im folgenden anhand von Ausführungsbeispielen in Verbindung mit der Zeichnung näher erläutert.

Es zeigen
Fig.1 im Axialschnitt ein Lager gemäß der Erfindung in einer ersten Ausführungsform; und
Fig.2 ebenfalls im Axialschnitt ein zweites Ausführungsbeispiel der Erfindung.

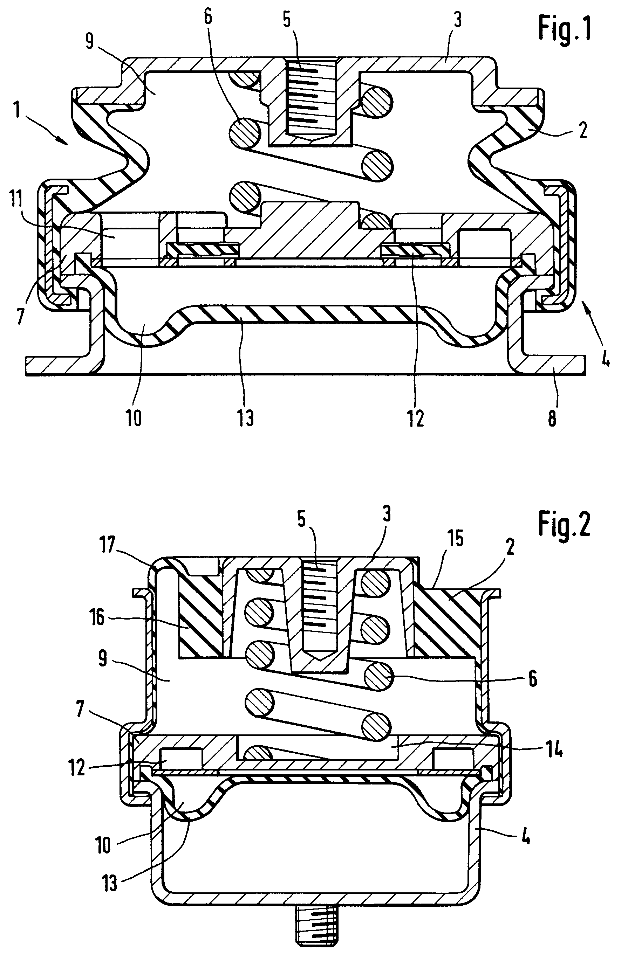

Wie aus Fig.1 der Zeichnung ersichtlich, weist das Lager 1 in der dargestellten Ausführungsform im wesentlichen einen gummielastischen Tragkörper 2 mit einem daran angeordneten Anschlussstück 3 zur Verbindung des Lagers 1 mit einem nicht dargestellten Motor oder Antriebsaggregat eines Kraftfahrzeugs und einen Gehäuse 4 auf, das das Lager an einer Anordnungsvorrichtung, beispielsweise der Fahrzeugkarosserie, abstützt.

Das Lager 1 ist im dargestellten Ausführungsbeispiel rotationssymmetrisch, so daß das Anschlussstück 3 eine Kreisscheibe mit einer an deren Oberseite angeordneten Gewindebohrung 5 ist. Über die Gewindebohrung 5 ist ein in der Zeichnung nicht dargestellter Motor am Lager 1 angeschlossen. Das Anschlussstück 3 ist im Bereich seines Außenumfangs und im Bereich seiner vorsprungartig ausgebildeten unteren Deckseite mittels einer über einen Vulkanisationsvorgang hergestellten Gummi-Metall-Verbindung mit dem Tragkörper 2 verbunden.

Im Bereich der Gewindebohrung 5 erstreckt sich von der Unterseite des Anschlussstücks 3 eine stufenförmig ausgebildete Zentrierung, in die einerseits die Gewindebohrung 5 eingebracht ist und an der sich andererseits eine Federeinrichtung 6 in Form einer Schraubenfeder abstützt. Die Stahlschraubenfeder 6 nimmt die von dem nicht dargestellten Motor ausgehende vertikale Lastkomponente in der Weise auf, daß der Tragkörper 2 weitgehend unbelastet bleibt. Der Kraftfluß ist dabei derart, daß die Schraubenfeder 6 an einem kreisscheibenförmig ausgebildeten und innerhalb des Lagers 1 angeordneten Widerlagerstück 7 abgestützt ist.

Das Widerlagerstück 7 ist im Bereich seines Umfangs gegen ein querschnittlich nach radial aussen offenes U-förmiges zylindrisches Profil 8 des Gehäuses 4 abgestützt, so daß über das Profil 8 die Kraft in eine ortsfeste Halterung, beispielsweise also in eine in der Zeichnung nicht dargestellte Karosserie eines Kraftfahrzeugs, eingeleitet werden kann.

Zweckmässigerweise ist die Anordnung des Lagers 1 derart getroffen, daß die Schraubenfeder 6 innerhalb einer fluidgefüllten Arbeitskammer 9 angeordnet ist, die durch das Anschlussstück 3 und den Tragkörper 2 nach außen fluiddicht abgeschlossen ist. Unterhalb des Widerlagerstücks 7 ist eine Ausgleichkammer 10 gebildet, so daß ein Fluidaustausch zwischen dem in der Arbeitskammer 9 und der Ausgleichkammer 10 angeordneten Dämpfungsfluid über einen in dem Widerlagerstück 7 ausgebildeten Ringkanal 11 stattfinden kann.

Im dargestellten ersten Ausführungsbeispiel der Erfindung weist das Widerlagerstück 7 eine hydraulische Entkopplung 12 auf, die dafür sorgt, daß bei einer nur geringen dynamischen Belastung kein Hydraulikfluidvolumen durch den Ringkanal gepreßt wird, sondern dies erst bei größeren Störamplituden mit entsprechenden Volumenbewegungen und sich daraus ergebender hydraulischer Dämpfungsarbeit stattfindet. Die Ausgleichkammer 10 wird dabei von einer unterhalb des Widerlagerstücks 7 angeordneten und zwischen dem Widerlagerstück 7 und dem U-förmigen Profil 8 eingespannten Rollmembran 13 gebildet.

Fig. 2 zeigt das Lager in einer zweiten Ausführungsform. Diese zweite Ausführungsform weist ein Gehäuse 4 ähnlich dem in Fig. 1 dargestellten Gehäuse auf, das zweistückig topfförmig konfiguriert ist. Im Auflagebereich des Widerlagerstücks 7 ist das Gehäuse so geteilt, dass sich die beiden Gehäuseteile gegenseitig überkragen. Unterhalb des Widerlagerstücks 7 ist eine Rollmembran 13 zur Bildung der Ausgleichkammer 10 angeordnet.

Das Widerlagerstück 7 weist in der dargestellten zweiten Ausführungsform eine der Arbeitskammer 9 zugewandte Ausnehmung 14 zur Zentrierung der in der Arbeitskammer 9 angeordneten Schraubenfeder 6 auf. Die Schraubenfeder 6 stützt sich an ihrer Oberseite gegen eine Anschlussstück 3 ab, an dessen Oberseite eine Gewindebohrung 5 zur Anordnung des nicht dargestellten Motors vorgesehen ist.

Unterhalb des Anschlussstücks 3 ist ein der ersten Ausführungsform ähnlicher Absatz zur zentrierenden Anordnung der Schraubenfeder 6 vorgesehen.

Das Anschlussstück 3 besitzt im dargestellten zweiten Ausführungsbeispiel ein Axialschnittsprofil mit sich innerhalb der Fluidarbeitskammer radial außerhalb der Schraubenfeder 6 axial nach unten erstreckenden U-förmigen Schenkeln, so daß die Schraubenfeder innerhalb der so gebildeten sacklochartigen Ausnehmung aufgenommen ist. Im Bereich des Außenumfangs dieser Ausnehmung ist der gummielastische Tragkörper 2 in einer von der Darstellung in Fig. 1 abweichenden Konfiguration angeordnet.

Wie leicht ersichtlich, unterscheidet sich die Konfiguration des Tragkörpers 2 in der rechten Hälfte der Zeichnung nach Fig. 2 von derjenigen in der linken Hälfte der Zeichnung nach Fig. 2. Die Anordnung des Tragkörpers 2 ist im Bereich der rechten Hälfte dieser Zeichnung so gewählt, daß er den Ringraum zwischen dem Anschlussstück 3 und dem Gehäuse 4 vollständig ausfüllt, während die Anordnung in der linken Zeichnungshälfte so gewählt ist, daß zwischen dem Tragkörper 2 und dem Gehäuse 4 ein Radialabstand besteht, also ein zylindrischer Ringnutsektor oder eine prismatische oder zylindrische Ausnehmung ausgebildet ist. Der in der rechten Zeichnungshälfte dargestellte vollvolumige Abschnitt des Tragkörpers 2 dient als Sektorsteg 15 zur Radialführung des an der Gewindebohrung 5 angeordneten, in der Zeichnung nicht dargestellten Motors, d.h. also zur horizontalen Führung des am Lager 1 angeordneten Motors, während der in der linken Zeichnungshälfte dargestellte Anschlag 16 die Bewegungsfreiheit des Motors als Anschlag begrenzt. Die Stege 15 und Anschläge 16 sind dabei alternierend am Außenumfang des Tragkörpers 2 innerhalb des Gehäuses 4 verteilt, so daß sie in einer querschnittlichen Draufsichtansicht einem Keilnaben- bzw. Keilwellenprofil entsprechen mit sich radial vollständig nach außen erstreckenden Stegen 15 während die Anschläge 16 radial kürzer ausgebildet sind.

Im Bereich des auflastseitigen Endes des Tragkörpers 2 ist jeweils im Teilabschnitt des Anschlags 16 ein querschnittlich U-förmiger dünn ausgebildeter Blähbereich 17 des Tragkörpers 2 vorgesehen. Dieser partiell dünn ausgeführte Blähbereich dient im dargestellten zweiten Ausführungsbeispiel als hydraulische Entkopplung, so daß im Vergleich mit der in Fig. 1 dargestellten ersten Ausführungsform die hydraulische Entkopplung 12 in dem Widerlagerstück 7 nicht mehr gesondert vorgesehen zu sein braucht.

Im Falle nur geringfügiger dynamischer Belastungen findet zwischen der Arbeitskammer 9 und der Ausgleichkammer 10 des Lagers 1 nach Fig. 2 kein Fluidaustausch statt, sondern der partiell dünn ausgeführte Bereich 17 verformt sich geringfügig. Im Bereich größerer dynamischer Belastungen findet dann zwischen der Arbeitskammer 9 und der Ausgleichkammer 10 ein Fluidaustausch über den Ringkanal 11 statt. Dadurch wird hydraulische Dämpfungsarbeit verrichtet. Die Schraubenfeder 6 nimmt in beiden Ausführungsbeispielen die weitgehend vertikal wirkenden Lasten auf, so daß der gummielastische Tragkörper 2 hiervon weitgehend nicht beaufschlagt wird. Der Tragkörper 2 muß daher nur mehr die in Radialrichtung, beispielsweise aus Kippungen bzw. Kippbewegungen des Motors aufgrund der Rotation der Kurbelwelle des Motors herrührenden Lasten aufnehmen, so daß die im Vergleich mit bekannten Lagern dem Tragkörper ansonsten zukommende Funktion getrennt ist in die Aufnahme der weitgehend vertikal wirkenden Lasten durch die Schraubenfeder 6 und Aufnahme der weitgehend radial wirkenden Lasten durch den Tragkörper 2. Der Tragkörper 2 ist dabei im Vergleich mit Tragkörpern bekannter hydraulisch bedämpfter Lager von deutlich geringerer Steifigkeit, kann daher einen größeren linearen Freiweg durchführen mit sich daraus ergebender erheblich verbesserter dynamischer Federrate und einem wesentlich verbesserten akustischen Isolationsverhalten.

Die größeren Freiwege gestatten es dem Lager auch höheres Pumpvolumen zu erzielen mit sich daraus ergebender höherer hydraulischer Dämpfungsarbeit. Das Lager 1 kann in seiner Steifigkeit gezielt abgestimmt werden und kann eine auf den als störend empfundenen Frequenzbereich genau abstimmbare Tilgerwirkung ausüben mit an dieser Stelle minimaler dynamischer Federrate.

Das Lager 1 gemäß der Erfindung verfügt über eine in den Tragkörper integrierte hydraulische Entkopplung, so daß üblicherweise erforderliche zusätzliche Bauteile und Montageschritte entbehrlich werden. Darüber hinaus besitzt es eine im Vergleich mit bekannten Lagern deutlich höhere Temperaturbeständigkeit, was beim Einsatz an heißen Verbrennungsmotoren von Vorteil ist, und weist einen geringen Setzbetrag auf, so daß es für die Beibehaltung gleichbleibender akustischer Verhältnisse sorgt.

Hinsichtlich vorstehend im einzelnen nicht näher erläuterter Merkmale der Erfindung wird im übrigen ausdrücklich auf die Ansprüche und die Zeichnung verwiesen.

## Patentansprüche

1. Lager zur dämpfenden Anordnung schwingender Massen mit einem gummielastischen Tragkörper (2), einem an und/oder in dein Tragkörper (2) angeordneten Anschlussstück (3) zur Verbindung des Lagers mit der schwingenden Masse und einem Gehäuse (4), welches das Lager kraftschlüssig an einer Anordnungsvorrichtung abstützt,
dadurch **gekennzeichnet,**
daß das Lager mit einer zusätzlichen Federeinrichtung (6) zur Aufnahme im wesentlichen vertikal wirkender Lasten versehen ist.

2. Lager nach Anspruch 1,
dadurch **gekennzeichnet,**
daß die Federeinrichtung (6) eine körperlich vom gummielastischen Tragkörper (2) getrennt ausgebildete Federeinrichtung ist, aber funktionell mit dem Tragkörper (2) zur Aufnahme von Lasten in allen Raumrichtungen zusammenwirkt.

3. Lager nach Anspruch 1 oder 2,
dadurch **gekennzeichnet,**
daß das Lager mit einem Widerlagerstück (7) versehen ist, gegen die sich die Federeinrichtung (6) abstützt und welche die von der Federeinrichtung (6) aufgenommene Last in das Gehäuse (4) einleitet.

4. Lager nach einem der Ansprüche 1 bis 3,
dadurch **gekennzeichnet,**
daß die Federeinrichtung (6) zwischen dem Anschlussstück (3) und dem Widerlagerstück (7) angeordnet ist, die beide insbesondere metallisch ausgebildet sind.

5. Lager nach einem der Ansprüche 1 bis 4,
dadurch **gekennzeichnet,**
daß der gummielastische Tragkörper (2) im Bereich zwischen dem Anschlussstück (3) und dem Gehäuse (4) angeordnet ist.

6. Lager nach Ansspruch 5,
dadurch **gekennzeichnet,**
daß der gummielastische Tragkörper (2) unter statischer Belastung des Lagers unverspannt ist.

7. Lager nach einem der Ansprüche 1 bis 6,
dadurch **gekennzeichnet,**
daß der gummielastische Tragkörper (2) im Bereich seiner Anordnung am Gehäuse (4) zumindest teilweise dünnwandig ausgebildet ist.

8. Lager nach einem der Ansprüche 1 bis 7,
dadurch **gekennzeichnet,**
daß die Federeinrichtung (6) eine Schraubenfeder aus Stahl oder eine Elastomer-Schichtfeder ist, deren Elastomer-Federkörper mit haftvermittelten nichtelastischen Zwischenlagen, sogenannten "Formblechen", verstärkt ist.

9. Lager nach einem der Ansprüche 1 bis 8,
dadurch **gekennzeichnet,**
daß die Federeinrichtung (6) innerhalb der Arbeitskammer (9) eines fluidisch dämpfenden Lagers angeordnet ist, wobei die Arbeitskammer (9) über eine Durchflußeinrichtung (12) mit einer Ausgleichkammer (10) des Lagers zum Fluidaustausch in Verbindung steht.

10. Lager nach Anspruch 9,
dadurch **gekennzeichnet,**
daß die Durchflußeinrichtung ein mit Durchströmungssteuereinrichtungen versehener Ringkanal (12) ist, der in dem Widerlagerstück (7) ausgebildet ist.

11. Verwendung des Lagers nach einem der vorhergehenden Ansprüche zur schwingungsdämpfenden Lagerung einer Verbrennungskraftmaschine an einem Kraftfahrzeug.
